# EUROPEAN PATENT SPECIFICATION

(11) **EP 3 462 232 B1**
(45) Date of publication and mention of the grant of the patent: **15.12.2021**
(21) Application number: 17194042.2
(22) Date of filing: 29.09.2017
(51) Int. Cl.: G02F 1/015, G02F 1/025

(54) **ELECTRO-ABSORPTION MODULATOR**
ELEKTROABSORPTIONSMODULATOR
MODULATEUR D'ÉLECTRO-ABSORPTION

(43) Date of publication of application: 03.04.2019
(73) Proprietor: Huawei Technologies Co., Ltd., Shenzhen Guangdong 518129 (CN); Imec VZW, 3001 Leuven (BE)
(72) Inventor: CAI, Yan, 80992 Munich (DE); BAI, Yusheng, 80992 Munich (DE); VAN CAMPENHOUT, Joris, 3001 Leuven (BE)
(74) Representative: Roth, Sebastian

(56) References cited:
- WO-A1-2016/139484
- GB-A- 2 543 122
- US-A1- 2012 057 815
- US-A1- 2013 126 941
- US-A1- 2017 155 452
- US-B1- 9 142 698

## Description

### TECHNICAL FIELD

The present invention relates to an electro-absorption modulator (EAM) and to a fabrication method thereof. In particular, the present invention presents a new structure for the EAM, wherein the structure is based on the Germanium (Ge) and/or Germanium-Silicon (GeSi) semiconductor material system.

### BACKGROUND

Ge-based (i.e. Ge or GeSi) EAMs can potentially be used as optical modulators in photonics integrated circuits, for instance, for DataCOM and TeleCOM applications, due to their small footprint, low power consumption, high modulation speed, and large optical bandwidth. An EAM is a semiconductor device, which is used for modulating the intensity of a received light beam via an electric voltage.

Conventional Ge-based EAMs are usually configured to modulate the received light in particularly two different ways. Firstly, by exploiting the Franz-Keldysh effect in a bulk semiconductors, which is a change in the absorption spectrum of a bulk semiconductor in the presence of an applied electric field. The electric field changes the bandgap energy of the bulk semiconductor, but typically does not excite any carriers. Secondly, by exploiting the quantum-confined Stark effect in semiconductor quantum-well structures. The quantum-confined Stark effect describes the shift of discrete electron states to lower energy levels (and correspondingly discrete hole states to higher energy levels), when an external electric field is applied across a quantum-well. The energy level shifts may reduce the permitted light absorption or emission frequencies, respectively.

There exist several conventional Ge-based EAM designs integrated on silicon-on-insulator (SOI) photonics platforms. In particular, there exist EAM designs in which a lateral electric field is generated with a lateral PIN junction, and EAM designs in which a vertical electric field is generated with a PIN junction. 'Vertical' typically refers to the growth direction of semiconductor layers on a substrate. 'Lateral' typically refers to an in-plane direction of the semiconductor device.

For example, in one conventional waveguide-integrated GeSi EAM on a SOI platform, a lateral n⁺-GeSi/intrinsic GeSi/p⁺-GeSi junction is employed to generate a lateral electric field. In another conventional waveguide-integrated Ge EAM on a SOI platform, a lateral n⁺-Ge/intrinsic Ge/p⁺-Ge junction is employed to generate a lateral electric field. In another conventional waveguide-integrated Ge or GeSi EAM on an SOI platform, a lateral n⁺-Ge or GeSi/intrinsic Ge or GeSi/p⁺-Ge or GeSi junction is used to generate a lateral electric field. However, the conventional EAMs with lateral junctions all suffer from electric field strength limitations, due to wide waveguide widths limiting the modulation efficiencies of the modulators.

In another example of a conventional waveguide-integrated GeSi EAM, a vertical n⁺-Si/intrinsic GeSi/p⁺-Si junction is used to generate a vertical electric field. However, in this conventional EAM with vertical junction, a heavily-doped polycrystalline Si layer is directly applied on top of the Ge. This causes high optical losses in the modulator, as well as increased fabrication complexity.

GB 2 543 122 A discloses an optoelectronic component with an optically active region (OAR), a lower doped region located at a lower surface of the OAR, an upper doped region located at an upper surface of the OAR, and an intrinsic region located between the lower doped region and the upper doped region. The optoelectronic component may be based on a vertical PIN junction. US 2017/0155452 A1 discloses an optoelectronic device with an optical modulator based on a lateral PIN junction. US 9 142 698 B1 discloses an integrated electro-absorption modulator based on a lateral PIN junction.

### SUMMARY

In view of the above-mentioned disadvantages, the present invention aims to improve the conventional Ge-based EAMs. The present invention has the object to provide a Ge-based EAM, which suffers less from optical losses and is able to generate higher electric field strengths without adding fabrication complexity.

In particular, in order to reduce the optical losses compared to conventional EAMs, the present invention intends to avoid the use of doped polycrystalline silicon or metal on top of the Ge or GeSi, since these conductive materials are considered to be high-absorption materials for near-infrared light. Furthermore, in order to reduce the electric field strength limitations of conventional EAMs, the present invention intends to provide a structure that is in its dimensions not limited by lithography of Ge or GeSi.

The object of the present invention is achieved by the solution provided in the enclosed independent claims. Advantageous implementations of the present invention are further described in the dependent claims.

In particular, the core idea of the present invention is to use implementations into Ge or GeSi that result in p⁺- or n⁺-Ge or GeSi regions and enable a vertical PIN (VPIN) junction in the Ge-based material.

A first aspect of the present invention provides an EAM, comprising a first conductivity type Si layer and a second conductivity type Si layer adjacent to the first conductivity type Si layer, and a Ge layer provided on top of partly the first conductivity type Si layer and partly the second conductivity type Si layer, wherein the Ge layer includes an intrinsic lower region and a second conductivity type upper region, and wherein the Ge layer further includes a second conductivity type sidewall region that is in contact with the second conductivity type upper region of the Ge layer and with the second conductivity type Si layer below the Ge layer.

The first conductivity type Si layer, the intrinsic lower region of the Ge layer, and the second conductivity type upper region of the Ge layer form together a VPIN junction. Notably, the Ge layer may in fact be a GeSi layer. Due to the vertical orientation of this VPIN junction (wherein 'vertical' refers to a growth direction of the layers of the EAM structure on a substrate, i.e. to the direction in which the different layers are sequentially provided), a vertical electric field can be generated in an active region of the EAM. The vertical electric field is not limited by width of Ge, as in the conventional EAMs, particularly not by the minimum width achievable by patterning, but is only determined by the thickness of the Ge layer in the vertical direction. This thickness can be made much smaller than the minimum patterning width, leading to the result that larger electric fields can be achieved in the active region of the EAM. Thus, the optical performance of the EAM is significantly improved with the EAM design of the first aspect.

Furthermore, the EAM of the first aspect includes only p-type or n-type Ge regions that form the VPIN junction. For contacting the VPIN junction, a polycrystalline Si or metal on top of the Ge is not necessarily required. Since highly-doped polycrystalline Si and metal are considered to be high absorption materials for near-infrared light, the optical losses of the EAM may thus be reduced compared to the conventional EAMs without adding fabrication complexity.

By using two different implementations to create the two second conductivity type regions, an L-shaped second conductivity type region (for instance L-shaped doped p⁺- or n⁺-Ge region) is effectively created for contacting the VPIN junction. In particular, the VPIN junction can be contacted without any highly-doped polycrystalline Si or metal on top of the Ge. As a consequence, the optical losses of the EAM can be significantly reduced compared to the conventional EAMs without adding fabrication complexity. That is, the upper region of the Ge layer can be contacted via the second conductivity type Si layer and the second conductivity type sidewall region, respectively. The first conductivity type Si layer can be contacted directly. A voltage difference applied between the two Si layers of different conductivity type generates the electric field.

In an implementation form of the first aspect, the Ge layer is designed to act as a waveguide, and the first and second conductivity type Si layers and the second conductivity type upper region of the Ge layer are designed such that an electric field can be applied across the intrinsic lower region of the Ge layer.

To apply the electric field across the intrinsic lower region of the Ge layer, particularly a voltage difference can be applied between the second conductivity type upper region of the Ge layer and the first conductivity type Si layer. To this end, the upper region of the Ge layer and the Si layer may respectively be contacted. To provide good electric contact, the first conductivity type Si layer and the second conductivity type upper region of the Ge layer, respectively, have preferably a high enough conductivity, which is provided particularly by a doping level as descripted further below.

When the modulator is connected to a light source the Ge layer acts as a waveguide to transmit light. The light transmitted through the Ge layer acting as a waveguide, particularly through the intrinsic lower region of the Ge layer, can be modulated by generating the vertical electric field in the VPIN junction. Thus, an EAM with high electric field strength and low optical losses is obtained.

In a further implementation form of the first aspect, the junction between the first conductivity type Si layer and the second conductivity type Si layer and a junction between the intrinsic lower region and the second conductivity sidewall region of the Ge layer are aligned.

The alignment has the advantage that a more precisely defined electric field can be generated. However, the alignment is not absolutely necessary. If the junctions are not aligned, process steps for producing the EAM may be simplified.

In a further implementation form of the first aspect, the EAM further comprises a first contact, preferably a metal contact, connected to the first conductivity type Si layer, and a second contact, preferably a metal contact, connected to the second conductivity type Si layer.

Via the two metal contacts, the two Si layers of different conductivity types can be contacted, and accordingly the VPIN junction can be contacted. An applied voltage difference to the contacts then creates the vertical electric field, which can act on the waveguide of the EAM to modulate light that is passing through the Ge layer.

In a further implementation form of the first aspect, the first conductivity type Si layer is n-type, the second conductivity type upper region of the Ge layer is p-type, and the second conductivity type Si layer is p-type, or the first conductivity type Si layer is p-type, the second conductivity type upper region of the Ge layer is n-type, and the second conductivity type Si layer is n-type.

Thus, the VPIN junction can be provided in at least two different ways. Strictly speaking, either a vertical 'NIP' junction or a vertical 'PIN' junction is created along the vertical direction of the EAM, when viewed from bottom to top, i.e. along the growth direction of the semiconductor layers. However, for both cases it is referred to a VPIN junction. If the second conductivity type upper region of the Ge layer is n-type, also the second conductivity type sidewall region of the Ge layer is n-type, and if the second conductivity type upper region of the Ge layer is p-type, also the second conductivity type sidewall region of the Ge layer is p-type.

In a further implementation form of the first aspect, a doping level in the first conductivity type Si layer and/or the second conductivity type Si layer and/or Ge layer is between 10¹⁷ cm⁻³ to 10²⁰ cm⁻³.

With these doping levels, good contacting of the VPIN junction is possible, and thus high extinction ratios are possible for the EAM. This is due to high electric fields that can be generated.

In a further implementation form of the first aspect, a dopant in a second conductivity type region of the Ge layer is boron (B) for p-type or phosphorous (P) for n-type.

In a further implementation form of the first aspect, a height of the second conductivity type sidewall region of the Ge layer is equal to the height of the Ge layer, and/or a width of the second conductivity type sidewall region of the Ge layer is between 25-75 nm, such as 50 nm.

With these preferred dimensions, the performance of the EAM is optimized, particularly in terms of low optical insertion loss and high extinction ratio.

In a further implementation form of the first aspect, a height of the first conductivity type Si layer and/or the second conductivity type Si layer is between 150-300 nm, preferably between 200-230 nm.

With these preferred dimensions, the performance of the EAM is optimized, particularly in terms of low optical insertion loss and high extinction ratio.

In a further implementation form of the first aspect, a height of the Ge layer is between 100-400 nm, preferably between 200-300 nm and/or a width of the Ge layer is between 500-2000 nm, preferably between 600-1500 nm, more preferably between 800-1000 nm.

With these preferred dimensions, the performance of the EAM is optimized, particularly in terms of low optical insertion loss and high extinction ratio.

In a further implementation form of the first aspect, a height of the second conductivity type upper region of the Ge layer is between 50-150 nm, preferably 100 nm, and/or a width of the second conductivity type upper region of the Ge layer is equal to the width of the Ge layer.

With these preferred dimensions, the performance of the EAM is optimized, particularly in terms of low optical insertion loss and high extinction ratio.

In a further implementation form of the first aspect, the Ge layer includes a Si content of between 0% and 10%, preferably <2%.

That is, as already mentioned above, the 'Ge layer' described in the first aspect of the invention may in fact be either a pure Ge layer without any Si, or may be a GeSi layer with a Si content of up to 10%.

A second aspect of the present invention provides a method for fabricating an electro-absorption modulator, comprising creating a first conductivity type Si layer and a second conductivity type Si layer adjacent to the first conductivity type Si layer in a substrate, growing, preferably by epitaxy, an intrinsic Ge layer partly on the first conductivity type Si layer and partly on top of the second conductivity type Si layer, providing, preferably by implantation, a second conductivity type upper region in the Ge layer, and providing, preferably by implantation, a second conductivity type sidewall region in the Ge layer so that it is in contact with the second conductivity type upper region of the Ge layer and with the second conductivity type Si layer below the Ge layer.

With the method of the second aspect, all advantages and effects described for the EAM of the first aspect are achieved.

In an implementation form of the second aspect, the Ge layer is designed to act as a waveguide, and the first and second conductivity type Si layers and the second conductivity type upper region of the Ge layer are designed such that an electric field can be applied across the intrinsic lower region of the Ge layer.

In a further implementation form of the second aspect, the method further comprises providing a first contact, preferably a metal contact, connected to the first conductivity type Si layer, and providing a second contact, preferably a metal contact, connected to the second conductivity type Si layer.

In a further implementation form of the second aspect, the first conductivity type Si layer is n-type, the second conductivity type upper region of the Ge layer is p-type, and the second conductivity type Si layer is p-type, or the first conductivity type Si layer is p-type, the second conductivity type upper region of the Ge layer is n-type, and the second conductivity type Si layer is n-type.

In a further implementation form of the second aspect, the first conductivity type Si layer and/or the second conductivity type Si layer and/or Ge layer is provided with a doping level between 10¹⁷ cm⁻³ to 10²⁰ cm⁻³.

In a further implementation form of the second aspect, the second conductivity type region of the Ge layer is provided with B as a dopant for p-type or P as a dopant for n-type.

In a further implementation form of the second aspect, a height of the second conductivity type sidewall region of the Ge layer is made equal to the height of the Ge layer, and/or a width of the second conductivity type sidewall region of the Ge layer is made between 25-75 nm, such as 50 nm.

In a further implementation form of the second aspect, a height of the first conductivity type Si layer and/or the second conductivity type Si layer is made between 150-300 nm, preferably between 200-230 nm.

In a further implementation form of the second aspect, a height of the Ge layer is made between 100-400 nm, preferably between 200-300 nm and/or a width of the Ge layer is made between 500-2000 nm, preferably between 600-1500 nm, more preferably between 800-1000 nm.

In a further implementation form of the second aspect, a height of the second conductivity type upper region of the Ge layer is made between 50-150 nm, preferably 100 nm, and/or a width of the second conductivity type upper region of the Ge layer is made equal to the width of the Ge layer.

In a further implementation form of the first aspect, a Si content of between 0% and 10%, preferably <2% is included into the Ge layer.

The implementation forms of the method of the second aspect achieve all advantages and effects described above of the respective implementation forms of the EAM of the first aspect.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above-described aspects and implementation forms of the present invention will be explained in the following description of specific embodiments in relation to the enclosed drawings, in which
- FIG. 1: shows an EAM according to an example of the present invention.
- FIG. 2: shows a top view of an EAM according to an embodiment of the present invention.
- FIG. 3: shows a cross section of an EAM according to an embodiment of the present invention.
- FIG. 4: shows a cross section of an EAM according to an embodiment of the present invention.
- FIG. 5: shows a method according to an embodiment of the present invention.
- FIG. 6: shows several process steps of a method according to an embodiment of the present invention.
- FIG. 7: shows a process step of a method according to an embodiment of the present invention.
- FIG. 8: shows a process step of a method according to an embodiment of the present invention.
- FIG. 9: shows a process step of a method according to an embodiment of the present invention.
- FIG. 10: shows electric field simulations for an EAM according to an embodiment of the present invention.
- FIG. 11: shows electric field simulations for an EAM according to an embodiment of the present invention.
- FIG. 12: shows a wavelength-dependent extinction ratio and insertion loss for an EAM according to an embodiment of the present invention.
- FIG. 13: shows a performance comparison between an EAM according to an embodiment of the present invention and conventional EAMs.

### DETAILED DESCRIPTION OF EMBODIMENTS

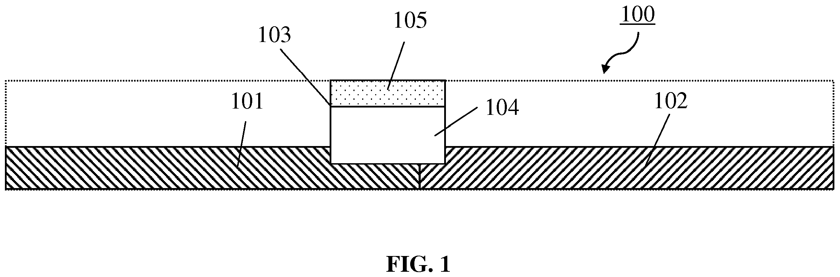

FIG. 1 shows elements of an EAM 100 according to an example of the present invention. The EAM 100 is Ge-based, that is, it is particularly fabricated in the Ge or the GeSi semiconductor material system. The EAM 100 is suitable for integration into photonics integrated circuits.

The EAM 100 comprises a first conductivity type Si layer 101 and a second conductivity type Si layer 102. Both of these Si layers 101 and 102 may be grown on a substrate, for instance by epitaxy. Both Si layers 101 and 102 may further be grown such that they are adjacent to another in the layer structure of the EAM 100 (this situation is shown in FIG. 1). It is noted that a growth direction of the different semiconductor layers is from bottom to top in FIG. 1 (and all other FIGs) and is along the vertical direction of the EAM 100.

On top of the first conductivity type Si layer 101 and the second conductivity type Si layer 102, a Ge layer 103 is provided. That is, the Ge layer 103 is specifically provided partly on the first conductivity type Si layer 101 and partly on the second conductivity type Si layer 102, respectively. The Ge layer 103 may thereby cover equally the two Si layers 101 and 102, or may cover areas of different sizes of these Si layers 101 and 102 (this situation is shown in FIG. 1).

The Ge layer 103 includes an intrinsic lower region 104 and a second conductivity type upper region 105. Thereby, 'first conductivity type' may be either n-type or p-type and 'second conductivity type' may respectively be p-type or n-type. That is, the first conductivity type Si layer 101 may be n-type, the second conductivity type upper region 105 of the Ge layer 103 may be p-type, and the second conductivity type Si layer 102 may also be p-type. In this case, an n⁺-Si/intrinsic Ge/p⁺-Ge VPIN junction is formed along the growth direction. Alternatively, the first conductivity type Si layer 101 may be p-type, the second conductivity type upper region 105 of the Ge layer 103 may be n-type, and the second conductivity type Si layer 102 may be n-type. In this case, a p⁺-Si/intrinsic Ge/n⁺-Ge VPIN junction is formed along the growth direction.

In use of the EAM 100 that is shown in FIG. 1, an electric field is generated between the second conductivity type upper region 105 of the Ge layer 103 and the first conductivity type Si layer 101, i.e. across the intrinsic region 104 of the Ge layer 103. Light passing through the Ge layer 103, especially through the intrinsic region 104 of the Ge layer 103, is accordingly modulated in the EAM 100 before it is output.

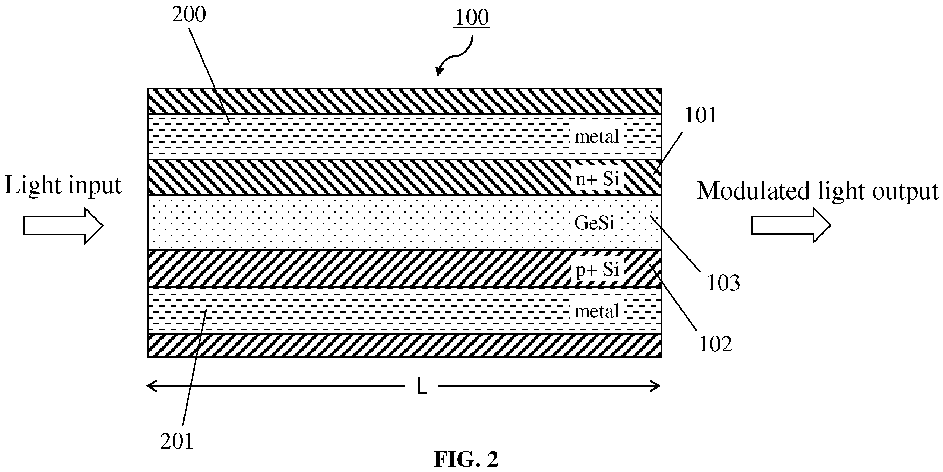

FIG. 2 shows a top view of a part of an EAM 100, which builds on the exemplary EAM 100 shown in FIG. 1. In FIG. 2 it is indicated that light can be input into the illustrated part of the EAM 100, and may be output as modulated light from the part of the EAM 100, if an electric field is generated across the waveguide carrying the light. Here, the Ge layer 103 is designed to act as a waveguide in the EAM 100. In other words when the Ge is in operation and connected to a light source the Ge layer acts as a waveguide to transmit light. Notably, the EAM 100 may include further waveguides that are not illustrated, for instance, for guiding the light to the Ge layer 103 or out of and away from the Ge layer 103.

In FIG. 2 it can also be seen that below the Ge layer 103 are arranged the first conductivity type Si layer 101, here exemplarily a n⁺-Si layer, and the second conductivity type Si layer 102, here exemplarily a p⁺-Si layer. On each of these Si layers 101 and 102, at least one metal contact is preferably provided, in order to contact the VPIN junction and apply a voltage difference to generate the electric field across the waveguide. In particular, a first metal contact 200 is illustrated exemplarily on the first conductivity type Si layer 101, and a second metal contact 201 is illustrated exemplarily on the second conductivity type layer 102.

The part of the EAM 100 shown in FIG. 2 has a certain length L, which can span roughly tens of µm. For instance, the length L may be around 50 µm. The length L depends on the application requirements of the EAM 100.

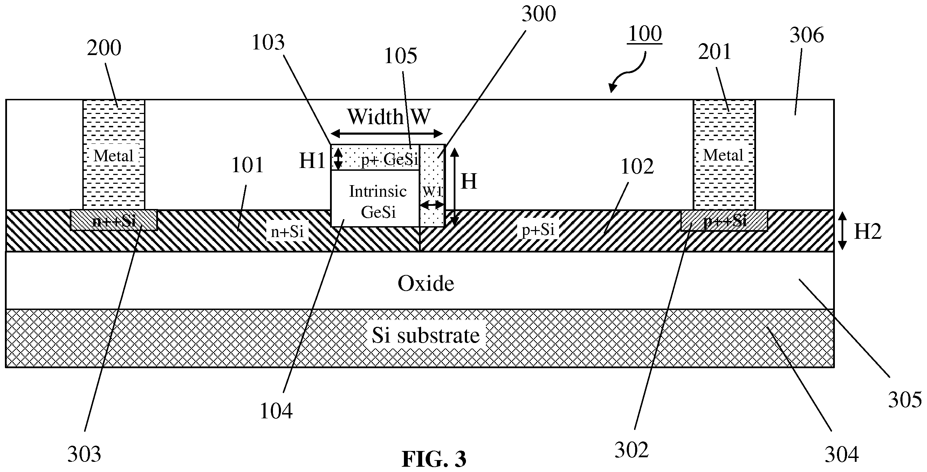

FIG. 3 shows a cross section through an EAM 100 according to an embodiment of the present invention, which builds on the exemplary EAM 100 shown in FIG. 1. In particular, FIG. 3 shows an EAM 100, in which a vertical PIN junction (viewed from top to bottom along the growth direction of the EAM 100) is formed. The EAM 100 of FIG. 3 includes, like the one in FIG. 1, the first conductivity type Si layer 101 and the second conductivity type Si layer 102. These Si layers 101 and 102 of different conductivity types are provided adjacent to each other, and are preferably formed in a substrate part of the EAM 100, the substrate part being for example made of a Si substrate 304 covered with an oxide 305.

Partly on both of the Si layers 101 and 102 is again provided the Ge layer 103, which includes the intrinsic lower region 104 and the second conductivity type upper region 105, which is here exemplarily p⁺-Ge. Furthermore, the Ge layer 103 includes a second conductivity type sidewall region 300, which is here exemplarily also p⁺-Ge, and is in contact with the second conductivity type upper region 105 of the Ge layer 103 and also with the second conductivity type Si layer 102 beneath the Ge layer 103. Preferably, a junction between the first conductivity type Si layer 101 and the second conductivity type Si layer 102 and a junction between the intrinsic lower region 104 and the second conductivity type sidewall region 300 of the Ge layer 103 are aligned as shown in FIG. 3.

The width of this sidewall region 300 is labelled with W1 and is typically around 50 nm. Specifically, the width W1 of the second conductivity type sidewall region 300 may preferably be between 25-75 nm, such as the mentioned 50 nm. A height of the second conductivity type upper region 105 of the Ge layer 103 is indicated as H1, and is typically around 50 nm. Especially, it may preferably be between 50-150 nm, more preferably around 100 nm. Its width is preferably the same width as the complete Ge layer 103, but this is not mandatory.

The total width of the Ge layer 103 is labelled with W and is typically a few hundreds of nm to a few µm. In particular, the width W is preferably between 500-2000 nm, more preferably between 600-1500 nm, most preferably between 800-1000 nm. The total height of the Ge layer 103 is labelled with H and is typically a few hundred nm such as 200 nm or 300 nm. Preferably, the height H of the Ge layer 103 is between 100-400 nm, more preferably between 200-300 nm.

In FIG. 3, also a height H2 is provided for the Si layers 101 and 102 of different conductivity types, which heights H2 are preferably the same, and are exemplarily in the order of 220 nm. Especially, the heights H2 of the Si layers 101 and 102 are preferably between 150-300 nm, and more preferably between 200 and 230 nm.

The EAM 100 of FIG. 3 includes further a higher first conductivity type contact region 303 provided in the first conductivity type Si layer 101, and is here in FIG. 3 exemplarily an n⁺⁺-Si layer 303. This higher first conductivity contact region 303 is, for example, used for contacting at least one first metal contact 200 provided on top of the first conductivity type Si layer 101. Likewise, in the second conductivity type Si layer 102 a higher second conductivity type contact region 302, here exemplarily a p⁺⁺-Si region, is provided for contacting, for example, at least one second metal contact 201. When a voltage difference is applied to these at least two metal contacts 200 and 201, an electric field will be created across the intrinsic region 104 of the Ge layer 103. The electrical connection is thereby on the one hand side from the first metal contact 200 via the higher first conductivity contact region 303 to the first conductivity Si layer 102 (for one 'electrode' of the VPIN junction), and on the other hand side from the second metal contact 201 via the higher second conductivity type contact region 302, via the second conductivity type Si layer 102, and via the second conductivity type sidewall region 300 to the second conductivity type upper region 105 of the Ge layer 103 (for the other 'electrode' of the VPIN junction).

Notably, the Ge layer 103 and the two contacts 201 and 203 may be covered at least partly by a passive and/or insulating material 306, such as an oxide.

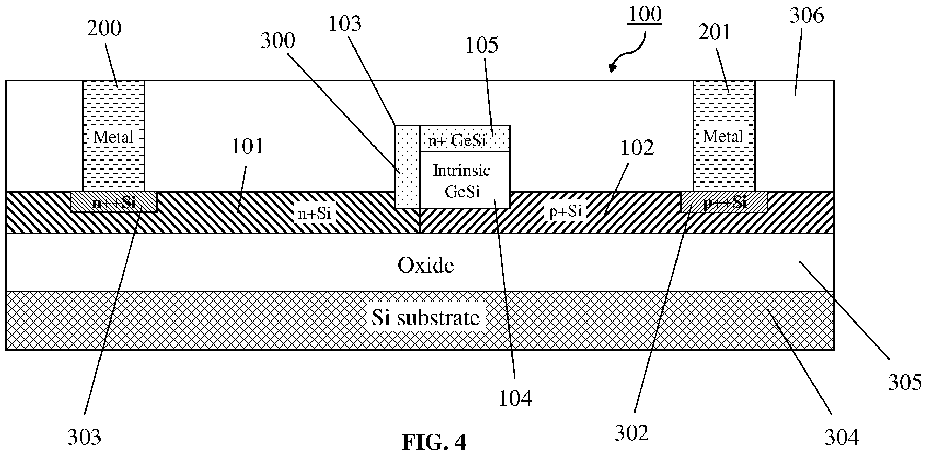

FIG. 4 shows a cross section through an EAM 100 according to an embodiment of the present invention, which builds on the exemplary EAM 100 shown in FIG. 1, and which is similar to the EAM 100 shown in FIG. 3. However, in the EAM 100 of FIG. 4 the first conductivity type is p-type and the second conductivity type is n-type, whereas vice versa in FIG. 3, the first conductivity type is n-type and the second conductivity type is p-type. Accordingly, a different VPIN junction is created, namely one formed by the n⁺-Ge upper region 105 of the Ge layer 103, the intrinsic lower region 104 of the Ge layer 103, and the p⁺-Si layer 101. In FIG. 4, in comparison to FIG. 3, all conductivity types (n-type and p-type) are inverted. Otherwise, the structure is like the one shown in FIG. 3, that is, the same dimensions H, H1, H2, W and W1 may be selected for the EAM 100 of FIG. 4.

In both the EAMs 100 shown in FIGs 3 and 4, a shallow second conductivity type is preferably created in the second conductivity type upper region 105 of the Ge layer 103, for instance, with B for p-type or P for n-type. Most preferably, these dopants are provided by implantation into the top of the Ge layer 103. For the second conductivity type sidewall region 300, the same dopants may be used, but preferably with a deep implantation. The first and second conductivity types of the Si layers 101 and 102 are preferably obtained by implantation into intrinsic SI, and the dopants may be provided during (e.g. epitaxial) growth. The higher conductivity type contact regions 302 and 303 may also be provided by implantation, wherein implantation doses are accordingly adjusted. A doping level in the first conductivity type Si layer 101 and/or the second conductivity type Si 102 and/or the doped regions of the Ge layer 103 is preferably between 10¹⁷ cm⁻³ to 10²⁰ cm⁻³ both for n⁺ and p⁺. Higher doping concentrations may accordingly be provided for n⁺⁺ and/or p⁺⁺ regions, i.e. doping levels above 10²⁰ cm⁻³, for instance 10²⁰ cm⁻³ to 10²³ cm⁻³.

Both EAMs 100 shown in FIG. 3 and FIG. 4 have in common that there is no doped Si or metal on top of the active Ge material of the Ge layer 103. This significantly reduces the optical losses in the EAM 100, particularly an insertion loss into the Ge layer 103 acting as waveguide.

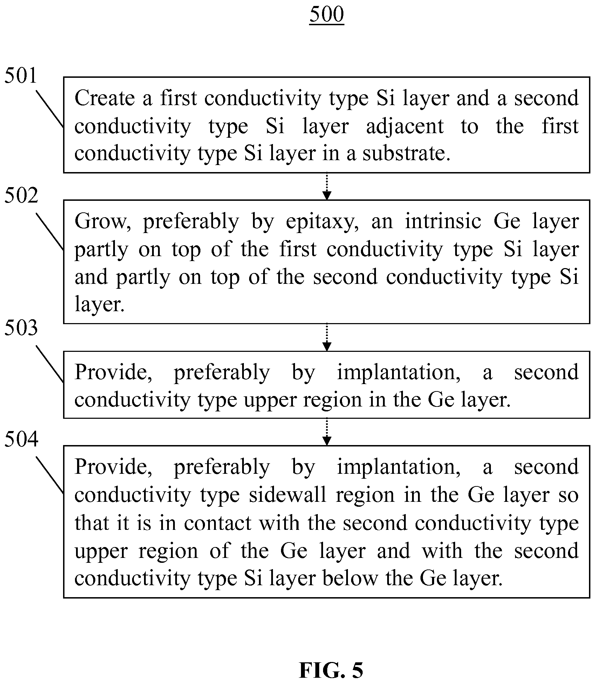

FIG. 5 shows a method 500 according to an embodiment of the present invention. The method 500 is suitable for fabricating an EAM 100, for instance, the EAM 100 shown in the FIGs 1, 2 or 3. In a first step 501 of the method 500, a first conductivity type Si layer 101 and a second conductivity type Si layer 102 adjacent to the first conductivity type Si layer 101 are created preferably in a substrate part like Si substrate 304 and oxide 305. In a second step 502 of the method 500, an intrinsic Ge layer 103 is grown partly on top of the first conductivity type Si layer 101 and partly on top of the second conductivity type Si layer 102. The growth is preferably carried out via epitaxy, for instance by molecular beam epitaxy. In a third step 503 of the method 500, a second conductivity type upper region 105 is provided in the Ge layer 103, preferably by implantation of dopants. In a fourth step 504 of the method 500, a second conductivity type sidewall region 300 is provided in the Ge layer 103, preferably by implantation, so that it is in contact with the second conductivity type upper region 105 of the Ge layer 103 and with the second conductivity type Si layer 102 below the Ge layer 103.

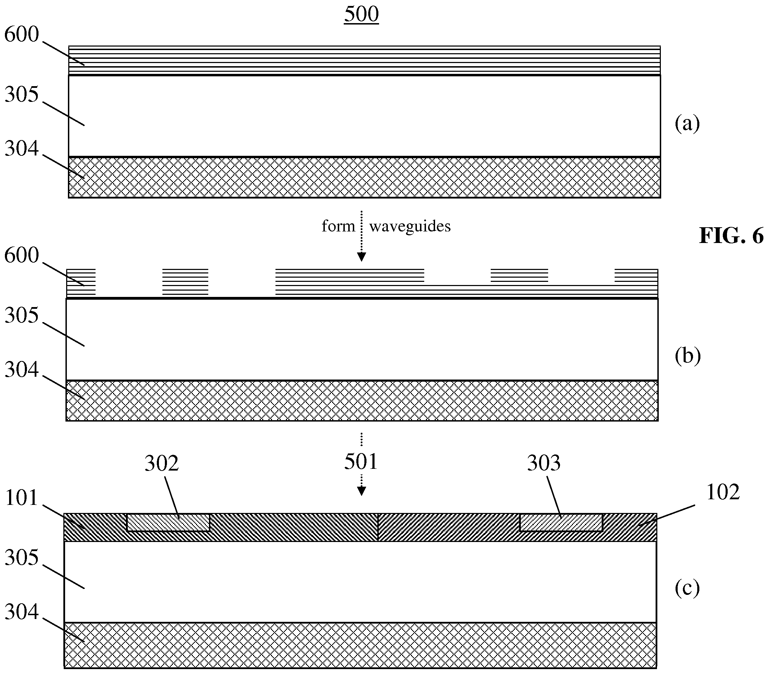

The FIGs 6-9 show in more detail method steps of the method 500 according to an embodiment of the present invention, that is, process steps for fabricating the EAM 100.

In particular, as shown in FIG. 6 (a), at first the substrate part provided, and particularly consists of a Si substrate 304 covered with an oxide 305 (for instance, a 2 µm thick oxide may be used). Then, an (preferably intrinsic) Si layer 600 is provided on top of the oxide 305. The Si layer 600 may have the above-mentioned height H2 of the later-formed first and/or second conductivity type Si layers 101 and 102, respectively.

The Si layer 600 may then be patterned to form Si waveguides, for instance, for light-in and modulated-light-out paths. The patterning can be realized with a full and/or partial etching of the Si layer 600. For instance, on the left-hand side of FIG. 6 (b) is shown that the Si layer 600 may completely be removed at dedicated positions, i.e. the Si layer 600 is here fully etched. On the right-hand side of Fig. 6 (b) is shown that parts of the Si layer 600 may be removed at dedicated positions, i.e. the Si layer 600 is here only partially etched. The patterned waveguides are notably not shown in the following illustrations of process steps of the method 500 for reasons of simplicity. In this context it is also noted that the illustrations of the cross sections through the intermediated structures of the EAM 100, which are obtained after the different process steps shown for the method 500, are schematic cross section only.

The structure in FIG. 6 (c) is obtained after applying method step 501. Namely, a first conductivity type Si layer 101 and a second conductivity type Si layer 102 are obtained. In a further step of the method 500, also contact regions made by higher conductivity type regions 302 and 303 may be obtained. The layers and regions 101, 102, 302 and 303 may here be obtained by Si implantations, in order to form n⁺-Si, p⁺-Si, n⁺⁺-Si or p⁺⁺-Si through different implantation doses and energies, respectively. For instance, the first conductivity type Si layer 101 may be n⁺-Si, the second conductivity type Si layer 102 may be p⁺-Si, and accordingly the higher first conductivity type contact region 302 may be n⁺⁺-Si and the higher second conductivity type contact region 303 may be p⁺⁺-Si.

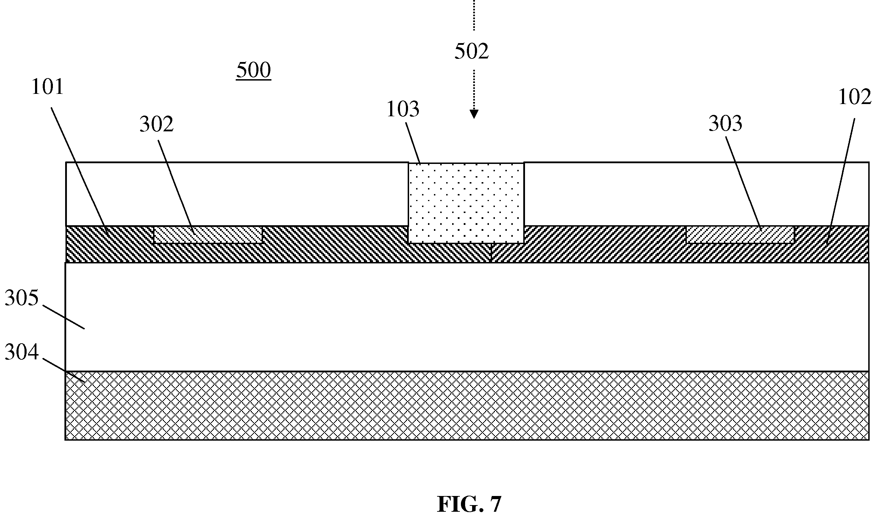

The next structure shown in FIG. 7 results from the process step 502 of the method 500. That is, a Ge layer 103 is provided on the first conductivity type Si layer 101 and the second conductivity type Si layer 102, respectively. Here, the Ge layer 103 is selectively grown, preferably by epitaxial techniques, on the Si layers 101 and 102. Notably, the Si concentration inside of the Ge layer 103 can be varied in dependence of the modulation wavelength, thereby ranging from 0% of Si (pure Ge), or a few percent of Si (GeSi) inside of the Ge layer 103 with a Si content up to 10%. After the growth of the Ge layer 103, a CMP may be applied for planarization.

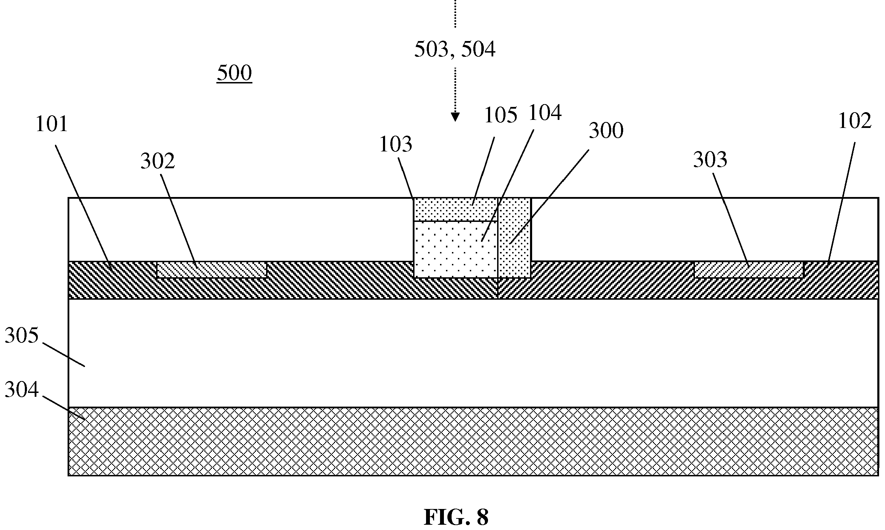

FIG. 8 shows the structure of the EAM 100 after the method steps 503 and 504 of the method 500. That is, according to method step 503, a second conductivity type upper region 105 is provided in the Ge layer 103. This can be achieved, as explained above, with shallow implementation into the intrinsic Ge layer 103. This leaves still the intrinsic region 104 of the Ge layer 103. In step 504, a second conductivity type sidewall region 300 is additionally provided in the Ge layer 103, namely such that it is in contact with a second conductivity type upper region 105 of the Ge layer 103 and with the second conductivity type Si layer 102. As explained above, the second conductivity type sidewall region 300 can be created by deep implantation into the side region of the Ge layer 103 before the second conductivity type upper region 105 is formed, or into the side region of the intrinsic region 104 of the Ge layer 103 after the second conductivity type upper region 105 is formed.

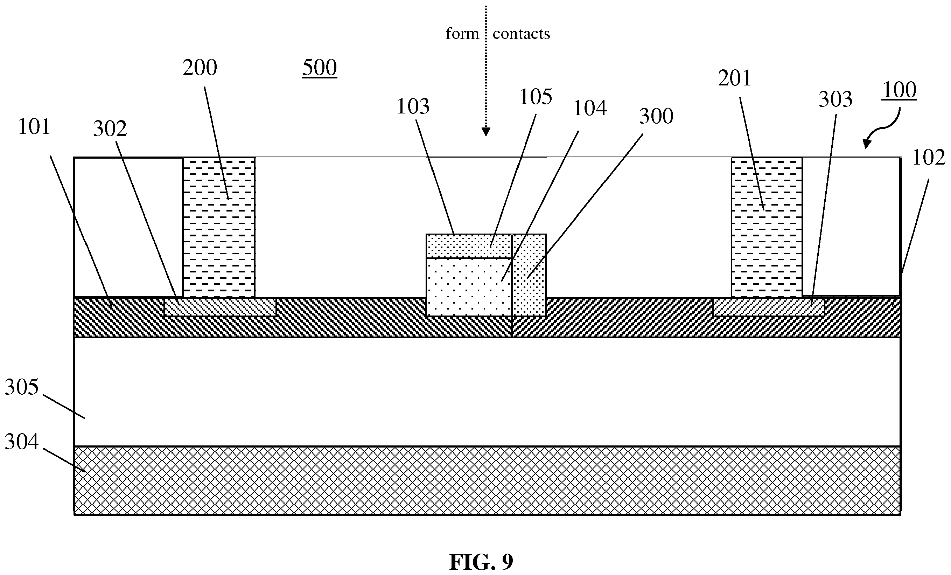

FIG. 9 shows further process steps that finalize the EAM 100, in particular first and second contacts 200 and 201, preferably both metal contacts, are provided to contact the VPIN junction via the higher conductivity contact regions 302 and 303, as well as via the first conductivity type and second conductivity type Si layers 101 and 102.

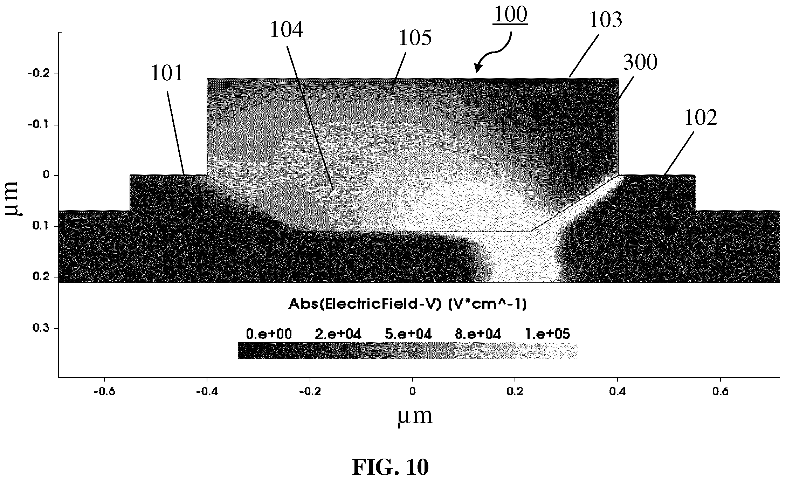

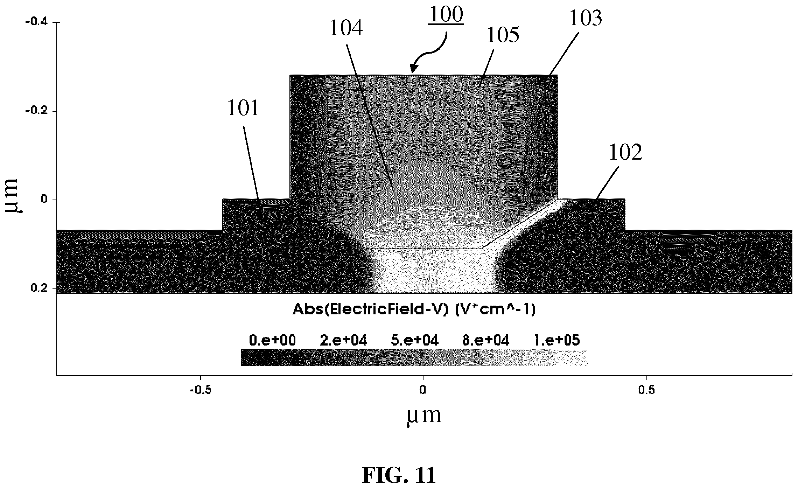

FIGs 10 and 11 respectively show electric field simulations of the VPIN in two different EAMs 100 according to embodiments of the present invention. The two EAMs 100 differ in height and width of the VPIN junction structure. FIG. 10 particularly shows for the first EAM 100 according to an exemplary embodiment of the present invention that at an applied voltage difference of -2V a center electric field of about 80 kV/cm is achieved. FIG. 11 shows for the second EAM 100 according to an exemplary embodiment of the present invention that at the same voltage different of -2V a center electric field of about 50 kV/cm is achieved. The achieved electric fields are considerably higher than in the conventional EAMs, and thus lead to better extinction ratios at lower optical loss.

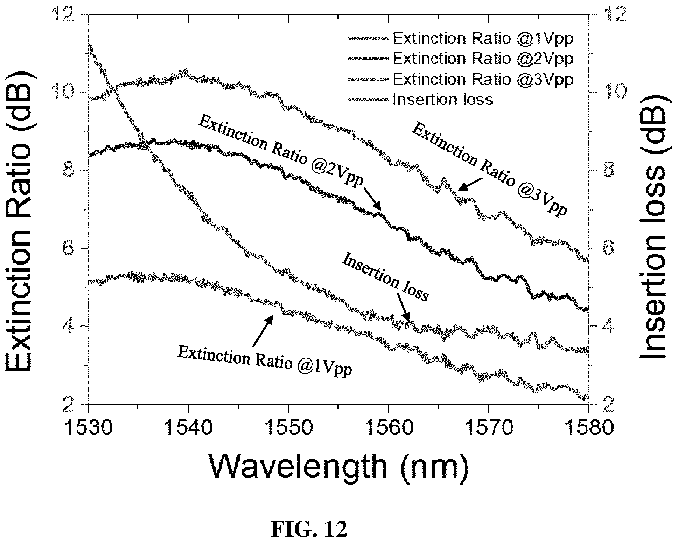

FIG. 12 shows extinction ratio and insertion loss of an EAM 100 according to an embodiment of the present invention in dependence of the wavelength of the light that is modulated by the EAM 100. The dimensions of this EAM 100 include a width W of the Ge layer of 800 nm, a height H of the Ge layer 103 of 300 nm, and a length L of 60 µm (compare FIG. 3). Notably, the operational wavelength of the EAM 100 depends on the Si concentration in the Ge layer 103, which is why the wavelength dependency is shown in FIG. 12. The different curves represent different voltage differences of respectively 1V, 2V, and 3V, which are applied to the contacts 200 and 201 of the EAM 100. It can be seen that extinction ratio and insertion loss reach very good values over the whole wavelength range of 1530-1580 nm. In particular, the insertion loss is below 12dB over the whole wavelength spectrum and even drops below 6dB or even 4dB for wavelengths above 1550 nm. Further, the extinction ratio, which obviously depends on the applied voltage and generated electric field strength, reaches values above 4dB at 1V, above 8dB at 2V, and above 10dB at 3V at around 1540 nm.

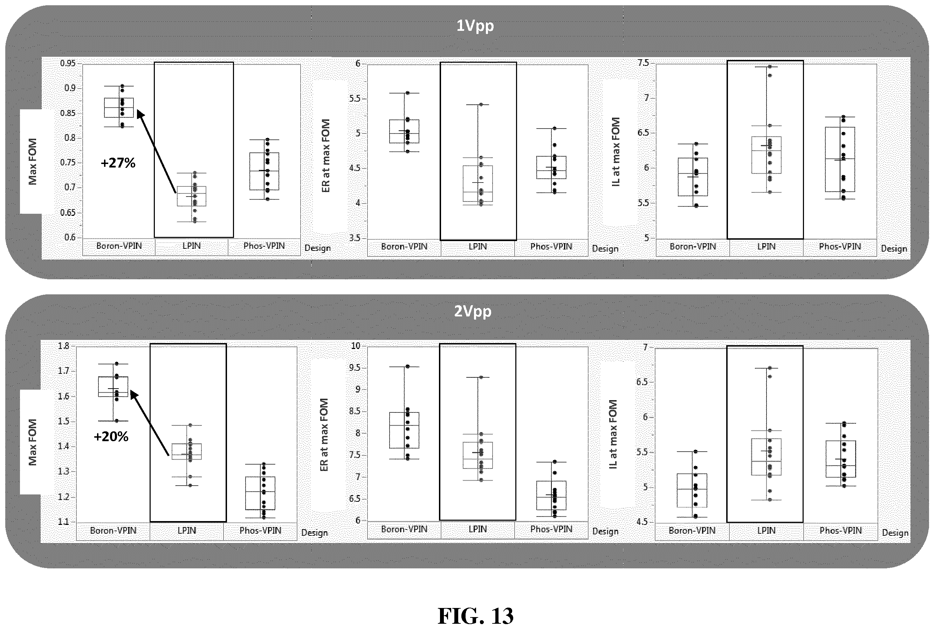

FIG. 13 shows a performance comparison between the design of an EAM 100 according to an embodiment of the present invention (labelled 'Boron-VPIN', since the Ge layer 103 is B doped) and two designs of conventional EAMs including one with a lateral PIN junction (labelled 'LPIN') and another one with a vertical PIN junction (labelled 'Phos-VPIN'), respectively. In particular for comparing the performance of the EAMs, a Figure of Merit (FOM) is compared. The FOM is the extinction ratio divided by the insertion loss. That is, either a higher extinction ratio or a lower insertion loss increase the FOM.

It can be seen that the maximum FOM (MaxFOM), an indicator of the EAM performance at the optimum wavelength, is increased by 27% compared to the conventional LPIN junction modulator at 1V voltage difference (labelled `1Vpp') applied to the contacts 200, 201 of the EAM 100, and is still increased by 20% compared to the conventional LPIN junction modulator at 2V voltage difference ('2Vpp') applied to the contacts 200, 201 of the EAM 100. The performance increase over the conventional VPIN junction modulator is somewhat lower at 1V but even higher at 2V.

The individual contributing factors to the FOM, namely the extinction ratio ('ER') and the insertion loss ('IL'), respectively, are individually compared in FIG. 13 at the MaxFOM. It can be gathered from FIG. 13 that the extinction ratio is higher for the EAM 100 than for the conventional LPIN and VPIN junction modulators, and that also the insertion loss is lower for the EAM 100 than for the conventional LPIN and VPIN junction modulators. This is notably true for both voltage difference cases of 1V and 2V.

In summary, by forming in an active Ge-based material (Ge or GeSi layer 103) a VPIN junction of the EAM 100, and correspondingly by generate a vertical electric fields in across the waveguide, the EAM 100 according to embodiments of the present invention achieves higher extinction ratios than the conventional EAMs (which is due to the higher electric fields that can be achieved) and at the same time lower optical losses than the conventional EAMs (which is for example due to the omission of doped Si or metal on top of the Ge), and particularly achieves a considerably higher FOM (ER/IL) than the conventional EAMs over a range of voltages applied and large wavelength spectrum.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Electro-absorption modulator (100), comprising
a first conductivity type silicon, Si, layer (101), and a second conductivity type Si layer (102) adjacent to the first conductivity type Si layer (101), and
a germanium, Ge, layer (103) provided on top of partly the first conductivity type Si layer (101) and partly the second conductivity type Si layer (102),
wherein the Ge layer (103) includes an intrinsic lower region (104) and a second conductivity type upper region (105), and
wherein the Ge layer (103) further includes a second conductivity type sidewall region (300) that is in contact with the second conductivity type upper region (105) of the Ge layer (103) and with the second conductivity type Si layer (102) below the Ge layer (103).

2. Electro-absorption modulator (100) according to claim 1, wherein
the Ge layer (103) is designed to act as a waveguide, and
the first and second conductivity type Si layers (101, 102) and the second conductivity type upper region (105) of the Ge layer (103) are designed such that an electrical field can be applied across the intrinsic lower region of the Ge layer (103).

3. Electro-absorption modulator (100) according to claim 1 or 2, wherein
a junction between the first conductivity type Si layer (101) and the second conductivity type Si layer (102) and a junction between the intrinsic lower region (104) and the second conductivity type sidewall region (300) of the Ge layer (103) are aligned.

4. Electro-absorption modulator (100) according to one of the claims 1 to 3, further comprising
a first contact (200), preferably a metal contact, connected to the first conductivity type Si layer (101), and
a second contact (201), preferably a metal contact, connected to the second conductivity type Si layer (102).

5. Electro-absorption modulator (100) according to one of the claims 1 to 4, wherein
the first conductivity type Si layer (101) is n-type, the second conductivity type upper region (105) of the Ge layer (103) is p-type, and the second conductivity type Si layer (102) is p-type, or
the first conductivity type Si layer (101) is p-type, the second conductivity type upper region (105) of the Ge layer (103) is n-type, and the second conductivity type Si layer (102) is n-type.

6. Electro-absorption modulator (100) according to claim 5, wherein
a doping level in the first conductivity type Si layer (101) and/or the second conductivity type Si (102) and/or Ge layer (103) is between 10¹⁷ cm⁻³ to 10²⁰ cm⁻³.

7. Electro-absorption modulator (100) according to claim 5 or 6, wherein
a dopant in a second conductivity type region (105, 300) of the Ge layer (103) is boron, B, for p-type or phosphorous, P, for n-type.

8. Electro-absorption modulator (100) according to one of the claims 2 to 7, wherein
a height of the second conductivity type sidewall region (300) of the Ge layer (103) is equal to the height of the Ge layer (103), and/or
a width of the second conductivity type sidewall region (300) of the Ge layer (103) is between 25-75 nm, such as 50 nm.

9. Electro-absorption modulator (100) according to one of the claims 2 to 8, wherein
a height of the first conductivity type Si layer (101) and/or the second conductivity type Si layer (102) is between 150-300 nm, preferably between 200-230 nm.

10. Electro-absorption modulator (100) according to one of the claims 1 to 9, wherein
a height of the Ge layer (103) is between 100-400 nm, preferably between 200-300 nm, and/or
a width of the Ge layer (103) is between 500-2000 nm, preferably between 600-1500 nm, more preferably between 800-1000 nm.

11. Electro-absorption modulator (100) according to one of the claims 1 to 10, wherein
a height of the second conductivity type upper region (105) of the Ge layer (103) is between 50-150 nm, preferably 100 nm, and/or
a width of the second conductivity type upper region (105) of the Ge layer (103) is equal to the width of the Ge layer (103).

12. Electro-absorption modulator (100) according to one of the claims 1 to 11, wherein the Ge layer (103) includes a Si content of between 0% and 10%, preferably <2%.

13. Method (500) for fabricating an electro-absorption modulator (100), comprising
creating (501) a first conductivity type silicon, Si, layer (101) and a second conductivity type Si layer (102) adjacent to the first conductivity type Si layer (101) in a substrate (304, 305),
growing (502), preferably by epitaxy, an intrinsic germanium, Ge, layer (103) partly on top of the first conductivity type Si layer (101) and partly on top of the second conductivity type Si layer (102),
providing (503), preferably by implantation, a second conductivity type upper region (105) in the Ge layer (103), and
providing (504), preferably by implantation, a second conductivity type sidewall region (300) in the Ge layer (103) so that it is in contact with the second conductivity type upper region (105) of the Ge layer (103) and with the second conductivity type Si layer (102) below the Ge layer (103).

## Patentansprüche

1. Elektroabsorptionsmodulator (100), umfassend:
eine Silizium-, Si-, Schicht (101) eines ersten Leitfähigkeitstyps und eine an die Si-Schicht (101) des ersten Leitfähigkeitstyps angrenzende Si-Schicht (102) eines zweiten Leitfähigkeitstyps, und
eine Germanium-, Ge-, Schicht (103), die teilweise auf der Si-Schicht (101) des ersten Leitfähigkeitstyps und teilweise auf der Si-Schicht (102) des zweiten Leitfähigkeitstyps vorgesehen ist,
wobei die Ge-Schicht (103) einen intrinsischen unteren Bereich (104) und einen oberen Bereich (105) des zweiten Leitfähigkeitstyps aufweist, und
wobei die Ge-Schicht (103) ferner einen Seitenwandbereich (300) des zweiten Leitfähigkeitstyps aufweist, der sich in Kontakt mit dem oberen Bereich (105) des zweiten Leitfähigkeitstyps der Ge-Schicht (103) und mit der Si-Schicht (102) des zweiten Leitfähigkeitstyps unterhalb der Ge-Schicht (103) befindet.

2. Elektroabsorptionsmodulator (100) gemäß Anspruch 1, wobei die Ge-Schicht (103) dazu ausgelegt ist, als Wellenleiter zu wirken, und
die Si-Schicht (101, 102) des ersten und des zweiten Leitfähigkeitstyps und der obere Bereich (105) des zweiten Leitfähigkeitstyps der Ge-Schicht (103) so ausgelegt sind, dass ein elektrisches Feld über den intrinsischen unteren Bereich der Ge-Schicht (103) angelegt werden kann.

3. Elektroabsorptionsmodulator (100) gemäß Anspruch 1 oder 2, wobei ein Übergang zwischen der Si-Schicht (101) des ersten Leitfähigkeitstyps und der Si-Schicht (102) des zweiten Leitfähigkeitstyps und ein Übergang zwischen dem intrinsischen unteren Bereich (104) und dem Seitenwandbereich (300) des zweiten Leitfähigkeitstyps der Ge-Schicht (103) ausgerichtet sind.

4. Elektroabsorptionsmodulator (100) gemäß einem der Ansprüche 1 bis 3, ferner umfassend:
einen ersten Kontakt (200), vorzugsweise einen Metallkontakt, der mit der Si-Schicht (101) des ersten Leitfähigkeitstyps verbunden ist, und
einen zweiten Kontakt (201), vorzugsweise einen Metallkontakt, der mit der Si-Schicht (102) des zweiten Leitfähigkeitstyps verbunden ist.

5. Elektroabsorptionsmodulator (100) gemäß einem der Ansprüche 1 bis 4, wobei
die Si-Schicht (101) des ersten Leitfähigkeitstyps vom n-Typ ist, der obere Bereich (105) der Ge-Schicht (103) des zweiten Leitfähigkeitstyps vom p-Typ ist und die Si-Schicht (102) des zweiten Leitfähigkeitstyps vom p-Typ ist, oder
die Si-Schicht (101) des ersten Leitfähigkeitstyps vom p-Typ ist, der obere Bereich (105) der Ge-Schicht (103) des zweiten Leitfähigkeitstyps vom n-Typ ist und die Si-Schicht (102) des zweiten Leitfähigkeitstyps vom n-Typ ist.

6. Elektroabsorptionsmodulator (100) gemäß Anspruch 5, wobei ein Dotierungsniveau in der Si-Schicht (101) des ersten Leitfähigkeitstyps und/oder dem Si (102) des zweiten Leitfähigkeitstyps und/oder der Ge-Schicht (103) zwischen 10¹⁷ cm⁻³ und 10²⁰ cm⁻³ liegt.

7. Elektroabsorptionsmodulator (100) gemäß Anspruch 5 oder 6, wobei ein Dotierstoff in einem Bereich (105, 300) des zweiten Leitfähigkeitstyps der Ge-Schicht (103) Bor, B, für den p-Typ oder Phosphor, P, für den n-Typ ist.

8. Elektroabsorptionsmodulator (100) gemäß einem der Ansprüche 2 bis 7, wobei
eine Höhe des Seitenwandbereichs (300) des zweiten Leitfähigkeitstyp der Ge-Schicht (103) gleich der Höhe der Ge-Schicht (103) ist, und/oder
eine Breite des Seitenwandbereichs (300) des zweiten Leitfähigkeitstyps der Ge-Schicht (103) zwischen 25-75 nm, wie z. B. 50 nm, liegt.

9. Elektroabsorptionsmodulator (100) gemäß einem der Ansprüche 2 bis 8, wobei eine Höhe der Si-Schicht des ersten Leitfähigkeitstyps (101) und/oder der Si-Schicht des zweiten Leitfähigkeitstyps (102) zwischen 150-300 nm, vorzugsweise zwischen 200-230 nm, liegt.

10. Elektroabsorptionsmodulator (100) gemäß einem der Ansprüche 1 bis 9, wobei
eine Höhe der Ge-Schicht (103) zwischen 100-400 nm, vorzugsweise zwischen 200-300 nm, beträgt und/oder
eine Breite der Ge-Schicht (103) zwischen 500-2000 nm, vorzugsweise zwischen 600-1500 nm, besonders bevorzugt zwischen 800-1000 nm beträgt.

11. Elektroabsorptionsmodulator (100) gemäß einem der Ansprüche 1 bis 10, wobei
eine Höhe des oberen Bereichs (105) des zweiten Leitfähigkeitstyps der Ge-Schicht (103) zwischen 50-150 nm, vorzugsweise 100 nm, beträgt und/oder
eine Breite des oberen Bereichs (105) des zweiten Leitfähigkeitstyps der Ge-Schicht (103) gleich der Breite der Ge-Schicht (103) ist.

12. Elektroabsorptionsmodulator (100) gemäß einem der Ansprüche 1 bis 11, wobei die Ge-Schicht (103) einen Si-Gehalt zwischen 0 % und 10 %, vorzugsweise <2 %, aufweist.

13. Verfahren (500) zum Herstellen eines Elektroabsorptionsmodulators (100), umfassend Erzeugen (501) einer Silizium-, Si-, Schicht (101) des ersten Leitfähigkeitstyps und einer an die Si-Schicht (101) des ersten Leitfähigkeitstyps angrenzende Si-Schicht (102) des zweiten Leitfähigkeitstyps in einem Substrat (304, 305),
Aufwachsen (502), vorzugsweise durch Kristallwachstum, einer intrinsischen Germanium-, Ge-, Schicht (103) teilweise auf der Si-Schicht des ersten Leitfähigkeitstyps (101) und teilweise auf der Si-Schicht des zweiten Leitfähigkeitstyps (102),
Bereitstellen (503), vorzugsweise durch Implantation, eines oberen Bereichs (105) eines zweiten Leitfähigkeitstyps in der Ge-Schicht (103), und
Bereitstellen (504), vorzugsweise durch Implantation, eines Seitenwandbereichs (300) eines zweiten Leitfähigkeitstyps in der Ge-Schicht (103), sodass er sich in Kontakt mit dem oberen Bereich (105) des zweiten Leitfähigkeitstyps der Ge-Schicht (103) und mit der Si-Schicht (102) des zweiten Leitfähigkeitstyps unterhalb der Ge-Schicht (103) befindet.

## Revendications

1. Modulateur d'électro-absorption (100), comprenant
une couche (101) de silicium, Si, d'un premier type de conductivité, et une couche de Si d'un second type de conductivité (102) adjacente à la couche de Si d'un premier type de conductivité (101), et
une couche de germanium, Ge, (103) disposée sur la partie supérieure de partiellement la couche de Si d'un premier type de conductivité (101) et partiellement la couche de Si d'un second type de conductivité (102),
dans lequel la couche de Ge (103) comprend une région inférieure intrinsèque (104) et une région supérieure d'un second type de conductivité (105), et
dans lequel la couche de Ge (103) comprend en outre une région de paroi latérale (300) d'un second type de conductivité qui est en contact avec la région supérieure d'un second type de conductivité (105) de la couche de Ge (103) et avec la couche de Si d'un second type de conductivité (102) sous la couche de Ge (103).

2. Modulateur d'électro-absorption (100) selon la revendication 1, dans lequel la couche de Ge (103) est conçue pour faire office de guide d'ondes, et
les couches de Si d'un premier et d'un second type de conductivité (101, 102) et la région supérieure d'un second type de conductivité (105) de la couche de Ge (103) sont conçues de telle sorte qu'un champ électrique puisse être appliqué sur toute l'étendue de la région inférieure intrinsèque de la couche de Ge (103).

3. Modulateur d'électro-absorption (100) selon la revendication 1 ou 2, dans lequel une jonction entre la couche de Si d'un premier type de conductivité (101) et la couche de Si d'un second type de conductivité (102) et une jonction entre la région inférieure intrinsèque (104) et la région de paroi latérale d'un second type de conductivité (300) de la couche de Ge (103) sont alignées.

4. Modulateur d'électro-absorption (100) selon l'une des revendications 1 à 3, comprenant en outre
un premier contact (200), de préférence un contact métallique, connecté à la couche de Si d'un premier type de conductivité (101), et
un second contact (201), de préférence un contact métallique, connecté à la couche de Si d'un second type de conductivité (102).

5. Modulateur d'électro-absorption (100) selon l'une des revendications 1 à 4, dans lequel
la couche de Si d'un premier type de conductivité (101) est de type n, la région supérieure d'un second type de conductivité (105) de la couche de Ge (103) est de type p, et la couche de Si d'un second type de conductivité (102) est de type p, ou
la couche de Si d'un premier type de conductivité (101) est de type p, la région supérieure d'un second type de conductivité (105) de la couche de Ge (103) est de type n, et la couche de Si d'un second type de conductivité (102) est de type n.

6. Modulateur d'électro-absorption (100) selon la revendication 5, dans lequel un niveau de dopage dans la couche de Si d'un premier type de conductivité (101) et/ou de Si d'un second type de conductivité (102) et/ou la couche de Ge (103) est compris entre 10¹⁷ cm⁻³ et 10²⁰ cm⁻³.

7. Modulateur d'électro-absorption (100) selon la revendication 5 ou 6, dans lequel un dopant dans une région d'un second type de conductivité (105, 300) de la couche de Ge (103) est le bore, B, pour le type p ou le phosphore, P, pour le type n.

8. Modulateur d'électro-absorption (100) selon l'une des revendications 2 à 7, dans lequel une hauteur de la région de paroi latérale d'un second type de conductivité (300) de la couche de Ge (103) est égale à la hauteur de la couche de Ge (103), et/ou une largeur de la région de paroi latérale d'un second type de conductivité (300) de la couche de Ge (103) est entre 25 et 75 nm, telle que 50 nm.

9. Modulateur d'électro-absorption (100) selon l'une des revendications 2 à 8, dans lequel une hauteur de la couche de Si d'un premier type de conductivité (101) et/ou de la couche de Si d'un second type de conductivité (102) est entre 150 et 300 nm, de préférence entre 200 et 230 nm.

10. Modulateur d'électro-absorption (100) selon l'une des revendications 1 à 9, dans lequel une hauteur de la couche de Ge (103) est entre 100 et 400 nm, de préférence entre 200 et 300 nm, et/ou
une largeur de la couche de Ge (103) est entre 500 et 2 000 nm, de préférence entre 600 et 1 500 nm, plus préférablement entre 800 et 1 000 nm.

11. Modulateur d'électro-absorption (100) selon l'une des revendications 1 à 10, dans lequel
une hauteur de la région supérieure d'un second type de conductivité (105) de la couche de Ge (103) est entre 50 et 150 nm, de préférence 100 nm, et/ou
une largeur de la région supérieure d'un second type de conductivité (105) de la couche de Ge (103) est égale à la largeur de la couche de Ge (103).

12. Modulateur d'électro-absorption (100) selon l'une des revendications 1 à 11, dans lequel
la couche de Ge (103) comprend une teneur en Si entre 0 % et 10 %, de préférence <2%.

13. Procédé (500) de fabrication d'un modulateur d'électro-absorption (100), comprenant
la création (501) d'une couche de silicium, Si, d'un premier type de conductivité (101) et d'une couche de Si d'un second type de conductivité (102) adjacente à la couche de Si d'un premier type de conductivité (101) dans un substrat (304, 305),
la croissance (502), de préférence par épitaxie, d'une couche intrinsèque de germanium, Ge, (103) partiellement sur la partie supérieure de la couche de Si d'un premier type de conductivité (101) et partiellement sur la partie supérieure de la couche de Si d'un second type de conductivité (102),
la fourniture (503), de préférence par implantation, d'une région supérieure d'un second type de conductivité (105) dans la couche de Ge (103), et
la fourniture (504), de préférence par implantation, d'une région de paroi latérale (300) d'un second type de conductivité dans la couche de Ge (103) afin qu'elle soit en contact avec la région supérieure d'un second type de conductivité (105) de la couche de Ge (103) et avec la couche de Si d'un second type de conductivité (102) sous la couche de Ge (103).
